# EUROPEAN PATENT SPECIFICATION

(11) **EP 3 530 391 B1**
(45) Date of publication and mention of the grant of the patent: **07.10.2026**
(21) Application number: 18158723.9
(22) Date of filing: 26.02.2018
(51) Int. Cl.: B23C 5/20, B23C 5/00

(54) **CUTTING INSERT AND MILLING TOOL WITH SUCH AN INSERT**
SCHNEIDEINSATZ UND FRÄSWERKZEUG MIT EINEM SOLCHEN SCHNEIDEINSATZ
INSERT DE DÉCOUPE ET OUTIL DE FRAISAGE AVEC UN TEL INSERT DE DÉCOUPE

(43) Date of publication of application: 28.08.2019
(73) Proprietor: Seco Tools AB, 737 82 Fagersta (SE)
(72) Inventor: Jansson, Mikael, 77462 Avesta (SE); Kantojärvi, Fredrik, 737 44 Fagersta (SE)
(74) Representative: Sandvik

(56) References cited:
- WO-A1-2013/077442
- WO-A1-2014/021314
- KR-A- 20060 135 211
- US-A- 5 460 464
- US-A1- 2010 150 671
- US-B2- 7 604 441

## Description

### TECHNICAL FIELD OF THE INVENTION

The present invention relates to a cutting insert for a milling tool according to the preamble of claim 1. It further relates to a milling tool comprising such a cutting insert.

### BACKGROUND OF THE INVENTION AND PRIOR ART

US2007003384 discloses a double-sided cutting insert for a face milling tool. The cutting insert has an inclined main cutting edge, sloping with respect to a central surface of an upper side of the cutting insert, such as to achieve a positive axial slope of the main cutting edge. During machining, the main cutting edge can thereby gradually enter the workpiece to provide a smooth cutting action.

Cutting inserts of the type disclosed in US2007003384 are often suitable for machining using milling tools with relatively small diameter, for which short chips are formed. This type of inserts, having a major part of the main cutting edge projecting above the central surface, have beneficial cutting properties. However, for larger tool diameters (cutting diameters), an arc of engagement, in which the cutting insert is in cutting engagement with the workpiece, is relatively large. The chips that are formed are consequently longer with a larger radius of curvature, thus requiring a larger chip pocket in the milling tool body, and the number of cutting inserts that can be used in the tool body is reduced.

Thanks to the fact that a major portion of the main cutting edge projects above the central surface, this type of inserts has beneficial cutting properties compared to cutting inserts without projecting main cutting edge, or with only a minor part of the main cutting edge projecting above the central surface. However, this property at the same time makes the cutting insert less appropriate for use in milling tools having a larger cutting diameter. To achieve a good performance through the whole range of the cutting diameters, two or more different cutting inserts with different cutting geometries are required in order to provide on one hand a good cutting action for small cutting diameters and on the other hand an adequate chip evacuation for big cutting diameters. A first cutting insert, used for small cutting diameters, can have a cutting geometry (rake angle and primary land) which is optimized for a good cutting action (low cutting forces) and a long tool life. However, when used in a milling tool with a relatively large cutting diameter, this first cutting insert does not exhibit sufficient chip formation properties, which leads to problems with chip evacuation. A second cutting insert, used for large cutting diameters, has a cutting geometry which is less light cutting (smaller rake angle and maybe provided with a wide and negative primary land) in order to achieve improved chip formation properties when used in a large tool. However, when such a cutting insert is used in a milling tool with a smaller cutting diameter, it results in a deteriorated cutting action and a shortened tool life.

WO 2014/021314 A1 discloses a cutting insert relating to the preamble of claim 1.

### SUMMARY OF THE INVENTION

It would be desirable to provide a cutting insert which has a major portion of the main cutting edge projecting above the central surface and which is suitable for use through a wide range of tool diameters. In particular, it would be desirable to provide such a cutting insert which simultaneously provides on one hand sufficient cutting action and tool life when used in small diameter milling tools, and on the other hand sufficient chip formation properties, not leading to problems with chip evacuation, when used in milling tools with a large cutting diameter.

To better address these concerns, a cutting insert according to claim 1 is provided. The cutting insert comprises:
- an upper side defining an upper extension plane and comprising a central surface,
- a lower side opposite to the upper side defining a lower extension plane, wherein a centre axis extends perpendicularly through the upper and lower extension planes,
- a peripheral side surface extending between the upper side and the lower side,
- at least one cutting edge formed in a transition between the upper side and the peripheral side surface, wherein the at least one cutting edge comprises a main cutting edge formed in a transition between the upper side and a main part of the peripheral side surface, wherein at least a projecting major portion of the main cutting edge projects above the central surface, wherein the projecting major portion of the main cutting edge is at least in part positively inclined with respect to the upper extension plane and creates an angle ϕ₁ with the upper extension plane as seen in a direction orthogonal to the main part of the peripheral side surface,
wherein the upper side comprises at least one rake surface extending inside of and along the at least one cutting edge, wherein the rake surface slopes downward toward the central surface. A plateau extending at least along the projecting major portion of the main cutting edge is formed inside of the at least one rake surface, wherein the plateau is elevated with respect to the central surface, wherein, as seen in the direction orthogonal to the main part of the peripheral side surface, a transition between the rake surface and the plateau extends at an angle ϕ₂ with respect to the upper extension plane, wherein Φ₂ >0°, wherein as seen in a top view, the transition between the rake surface and the plateau extends at an angle γ with respect to the main cutting edge, wherein -5° ≤ γ ≤ 5°, wherein a width wₚ of the plateau is related to a width wᵣ of the rake surface as 0.5 wᵣ ≤ wₚ ≤ 2 wᵣ , wherein the width wₚ of the plateau is the same along at least the projecting major portion of the main cutting edge, wherein the widths are measured in a direction perpendicular to the main cutting edge inside of which the plateau and the rake surface extend, and wherein the plateau forms a plane that extends in parallel with the main cutting edge, or at an angle of no more than ±5° with respect to the main cutting edge.

A projecting major portion of the main cutting edge projects above the central surface. In other words, a projecting major portion of the main cutting edge is situated above the central surface such that the distance from the lower extension plane to the projecting major portion of the main cutting edge is larger than the distance from the lower extension plane to the central surface of the upper side.

The upper side comprises at least one rake surface extending inside of and along the at least one cutting edge. In other words, the rake surface is situated between the at least one cutting edge and the central surface.

The plateau extends at least along the projecting major portion of the main cutting edge and is formed inside of the at least one rake surface. In other words, the plateau is situated closer to the central surface than at least a part of the at least one rake face.

The major portion of the main cutting edge is to be understood as comprising at least 50 % of the main cutting edge, so that a continuous major portion comprising at least 50 % of the main cutting edge projects above the central surface. The plateau thereby extends at least halfway along the main cutting edge.

The projecting major portion of the main cutting edge is at least in part positively inclined with respect to the upper extension plane, i.e. it slopes downward toward the central surface when going in a direction from the first end of the main cutting edge to the second end of the main cutting edge, such that it gradually enters the workpiece during machining, thus providing a smooth cutting action. The first end of the main cutting edge might be connected to a surface-wiping secondary cutting edge, belonging to the same cutting edge, via a corner cutting edge. This corner cutting edge is also called active corner cutting edge because it is involved in the cutting process independent of whether the depth of cut is small or large. The second end of the main cutting edge is opposite to the first end and involved in the cutting process only when the depth of cut has its maximal value that the insert can manage when mounted in the tool body. Preferably, but not necessarily, the projecting major portion of the main cutting edge, or the main cutting edge, is positively inclined and slopes downward already from its first end which means from the active corner cutting edge such that it gradually enters the workpiece during machining, thus providing a smooth cutting action, also at small depth of cuts. Preferably a major part (at least 50 %) of the projecting major portion of the main cutting edge is positively inclined. Preferable the entire part of at least the projecting major portion of the main cutting edge is positively inclined.

The elevated plateau, which does not form part of the central surface, provides improved chip formation since it compensates for the varying distance between the inclined main cutting edge and the central surface, which varies along the main cutting edge. The plateau extends along the projecting major portion of the main cutting edge and chips are thereby predominantly formed on the plateau and not on the central surface, for small as well as for large depths of cut. Thus, the chip formation becomes easier to control, in particular for large milling tools having a long arc of engagement between the cutting insert and the workpiece at the same time as the beneficial properties of this type of main cutting edge, having a major portion that projects above the central surface, are kept. Moreover, for varying depths of cut, the plateau enables formation of chips with a similar chip diameter independently of which part of the projecting major portion of the main cutting edge is in engagement with the workpiece, i.e. a similar curvature for small as well as for large depths of cut. The formed chips also have a smaller chip diameter in comparison with chips formed with a cutting insert without plateau.

The transition between the rake surface and the plateau may be understood as an intersection between the rake surface and the plateau. The transition may however be rounded so that no sharp intersection is formed. Since the transition extends at an angle ϕ₂ with respect to the upper extension plane, wherein ϕ₂>0°, the transition, and preferably the plateau, thus have the same type of inclination - positive inclination - as the main cutting edge, which creates an angle ϕ₁ with the upper transition plane. The angle ϕ₁ is typically in range between 4° and 15°, preferably around 10°. Thus, the transition and preferably the plateau have a positive inclination. When mounted in an insert seat of a tool body, the plateau thereby obtains a more positive inclination, or a less negative inclination, than the central surface of the cutting insert, which in turn has the effect that the chips easily glide and the transition and the plateau do not give a big contribution to the axial forces as the case might be with a transition and/or plateau that extend in parallel with the upper extension plane. The chip evacuation is thereby improved and the axial cutting forces decreased in comparison with a transition and/or a plateau that extend in parallel with the upper extension plane.

The angle ϕ₂ does not need to be equal to the angle ϕ₁. Furthermore, if the main cutting edge is curved when seen in a side view, i.e. in a direction orthogonal to the main part of the peripheral side surface, the angle ϕ₁ in a point of the main cutting edge is the angle between the tangent to the main cutting edge and the upper extension plane. In the same way, if the transition is curved when seen in side view orthogonal to the main part of the peripheral side surface, the angle ϕ₂ is the angle between a tangent to the transition in the same view, and the upper extension plane.

The central surface may be a flat surface extending in parallel with the upper extension plane, but it may also be inclined or nonplanar. The central surface may e.g. be profiled, or comprising a plurality of partial surfaces, wherein some or each partial surface(s) is/are not parallel to the upper extension plane. In particular, this may be the case for a double-sided cutting insert. Such a central surface might have a function of an anti-rotation locking interface, and/or an interface that locks the cutting insert axially and/or radially. Preferably, the central surface is a mainly flat surface, or a slightly convex or concave surface, or a surface having a slight inclination toward a centre of the cutting insert. In the case of a double-sided cutting insert, the central surface is arranged such that it can serve as a main support surface of the cutting insert when the cutting insert is mounted in an insert seat of a tool body.

The plateau is separated from the main cutting edge along the entire length of the plateau. Also, ends of the plateau are separated from the main cutting edge. This means that there is always a part of the rake surface between the cutting edge and the plateau along the part of the main cutting edge where the plateau is provided. Similar to this, if a primary land is provided between the at least one cutting edge and the rake surface, the plateau is separated from the primary land by at least a part of the rake surface. Thanks to this, a good function of the main cutting edge and good cutting action are ensured along the entire length of the main cutting edge. Preferably, but not necessarily, the plateau is separated from the entire cutting edge.

According to the invention, when seen in a top view, which means when seen in the direction of the normal vector to the upper extension plane, the transition between the rake surface and the plateau extends at an angle γ with respect to the main cutting edge, wherein -5° ≤ γ ≤ 5°. Thanks to this the distance between the projecting major portion of the main cutting edge and the plateau does not differ significantly along the projecting major portion, which contributes to similar chip formation properties at all positions of the projecting major portion of the main cutting edge.

According to the invention, the width wₚ of the plateau is related to a width wᵣ of the rake surface as 0.5 wᵣ ≤ wₚ ≤ 2 wᵣ. The widths are measured in a direction perpendicular to the main cutting edge inside of which the plateau and the rake surface extend. Within this interval, the plateau has an advantageous effect on the chip formation, while the central surface is still large enough to serve as a stable support surface when mounted in an insert seat of a tool body. The width wₚ of the plateau and the width wᵣ of the rake surface may e.g. be identical.

According to the invention, the width wₚ of the plateau is the same along at least the projecting major portion of the main cutting edge. The cutting insert may thereby provide similar conditions for chip formation along the projecting major portion of the main cutting edge.

According to the invention, the plateau forms a plane that extends in parallel with the main cutting edge, or at an angle of no more than ±5° with respect to the main cutting edge. The angle can be tuned depending on application of the cutting insert so as to achieve desired chip formation properties. The plateau thus has a slope relative the upper extension plane, but this slope is not necessarily the same as the slope of the main cutting edge. However, with the slope not differing by more than ±5° from the slope of the main cutting edge, the plateau and the main cutting edge generally have the same type of inclination, since the main cutting edge typically has a positive inclination of approximately 10°. Thus, also the plateau has a positive inclination. When mounted in an insert seat of a tool body, the plateau obtains a more positive inclination than the central surface of the cutting insert, or alternatively a less negative inclination depending on a tipping-in angle of the cutting insert. This has the effect that the chips glide more easily. The chip evacuation is thereby improved in comparison with a plateau that extends in parallel with the upper extension plane.

According to one embodiment, the rake surface and/or the plateau are planar surfaces at least along the projecting major portion of the main cutting edge or at least along a part of the projecting major portion of the main cutting edge. In this way, contact between on one hand the chip formed during machining and on the other hand the rake surface and the plateau is minimised, thereby reducing the wear on the cutting insert. Alternatively, the rake surface and the plateau may together form a rounded concave surface, which has its largest inclination closest to the cutting edge.

According to one embodiment, the transition between the rake surface and the plateau extends in parallel with at least the projecting major portion of the main cutting edge or at least with a part of the projecting major portion of the main cutting edge. Thus, the transition has the same inclination as the projecting major portion of the main cutting edge, regardless of whether the cutting insert is viewed from above or in a sectional view along the plateau. The plateau thereby extends at a distance to the cutting edge which is identical along the transition. This makes the chip formation more predictable for varying cutting depths.

According to one embodiment, as seen in a vertical section taken perpendicularly to the main cutting edge, the plateau is parallel to the upper extension plane P_{U} or has an angle of inclination of no more than ±5° with respect to the upper extension plane P_{U}. Thus, the plateau may have a small positive or negative slope with respect to the central surface. The angle of inclination may be selected so that the desired chip diameter is achieved, wherein a positive angle contributes to a larger chip diameter and vice versa or the angle of inclination may be selected depending on the properties of the workpiece material. The angle of inclination also affects the cutting force, with a positive angle of inclination generally contributing to reduced cutting forces.

According to one embodiment, a shortest distance between the main cutting edge and the plateau is the same along at least the projecting major portion of the main cutting edge or at least along a part of the projecting major portion of the main cutting edge. The shortest distance may be the same along the entire plateau. For example, if the plateau extends along the entire main cutting edge, it may extend so that the shortest distance between the plateau and the main cutting edge is the same along at least the part of the main cutting edge that projects above the central surface, or along the entire main cutting edge.

According to one embodiment, a primary land is provided between at least a part of the at least one cutting edge and the rake surface. The primary land may be inclined at a positive or a negative angle relatively the upper extension plane P_{U} and has the effect of strengthening the cutting edge. This is beneficial for most materials, but the primary land may be omitted when a sharp cutting edge is required, e.g. for cutting inserts intended to be used for machining of stainless steel or titanium alloys.

According to one embodiment, the plateau extends all the way along the at least one cutting edge. This is mainly advantageous from a production point of view, in particular when the cutting inserts are formed using pressing and sintering.

According to one embodiment, the upper side further comprises a transition surface connecting the plateau and the central surface, wherein the transition surface is positively inclined as seen in a vertical section taken perpendicularly to the main cutting edge. The positively inclined transition surface is advantageous from a production point of view, in particular when the cutting inserts are formed using pressing and sintering.

According to one embodiment, the cutting insert is indexable with at least two or three or four or five or six or seven or eight identical and alternately usable main cutting edges formed in the transition between the upper side and the peripheral side surface. This improves the tool life of the cutting insert.

According to one embodiment, the cutting insert is double-sided with the lower side being identical to the upper side, at least one cutting edge being formed in a transition between the lower side and the peripheral side surface. The plateau is particularly advantageous for double-sided cutting inserts since double-sided cutting inserts may have a main cutting edge projecting above the central surface at the same time as they are axially tipped-in with a negative or a neutral angle in the tool body. Due to the axial tipping-in angle, the chips in many applications do not have a desired helical shape, but instead have a more planar spiral shape without desired axial extension. Single-sided positive cutting inserts, however, may be axially tipped-in with a positive angle large enough to generate chips with a helical shape, but the plateau may have a positive effect also on that type of cutting inserts if the positive axial tipping-in is not large enough or if such a cutting insert is tipped-in with a neutral or negative axial tipping-in angle.

The cutting insert according to the invention is particularly suitable for face milling applications, but may also be used e.g. for shoulder milling and groove milling applications.

According to another aspect of the present invention, a milling tool according to claim 11 is provided. The milling tool comprises a tool body provided with an insert seat for receiving a cutting insert, wherein the milling tool comprises the proposed cutting insert arranged in the insert seat.

Moreover, a tool body (not covered by the scope of the invention) for such a milling tool is disclosed that has a central rotation axis around which the tool body is rotatable in a direction of rotation, wherein the tool body comprises a front end and a rear end between which an envelope surface extends, at least one insert seat being formed in a transition between the front end and the envelope surface, wherein said insert seat comprises a bottom contact surface configured to support the central surface of the lower side of the proposed double-sided cutting insert, wherein the insert seat comprises a recess extending between the bottom contact surface and the envelope surface, said recess being configured to accommodate the plateau of the lower side of the double-sided cutting insert.

Further advantageous features and advantages of the invention will appear from the following detailed description.

### BRIEF DESCRIPTION OF THE DRAWINGS

Embodiments of the invention will in the following be described by means of example with reference to the appended drawings, in which:
- Fig. 1: shows a perspective view of a cutting insert according to a first embodiment of the invention,
- Fig. 2: shows a side view of the cutting insert in fig. 1,
- Fig. 3: shows a top view of the cutting insert in fig. 1,
- Fig. 4: shows a section along the line IV-IV in fig. 3,
- Fig. 5a-c: show sections along the lines Va-Va, Vb-Vb, and Vc-Vc, respectively,
- Fig. 6: shows a perspective view of a cutting insert according to a second embodiment of the invention,
- Fig. 7: shows a side view of the cutting insert in fig. 6,
- Fig. 8: shows a top view of the cutting insert in fig. 6,
- Fig. 9: shows a section along the line IX-IX in fig. 6,
- Fig. 10: shows a perspective view of a milling tool according to an embodiment of the invention,
- Fig. 11: shows a side view of the milling tool in fig. 10,
- Fig. 12: shows a detail of the milling tool in fig. 10, and
- Fig. 13: shows a section along the line XIII-XIII in fig. 12.

### DETAILED DESCRIPTION OF EMBODIMENTS OF THE INVENTION

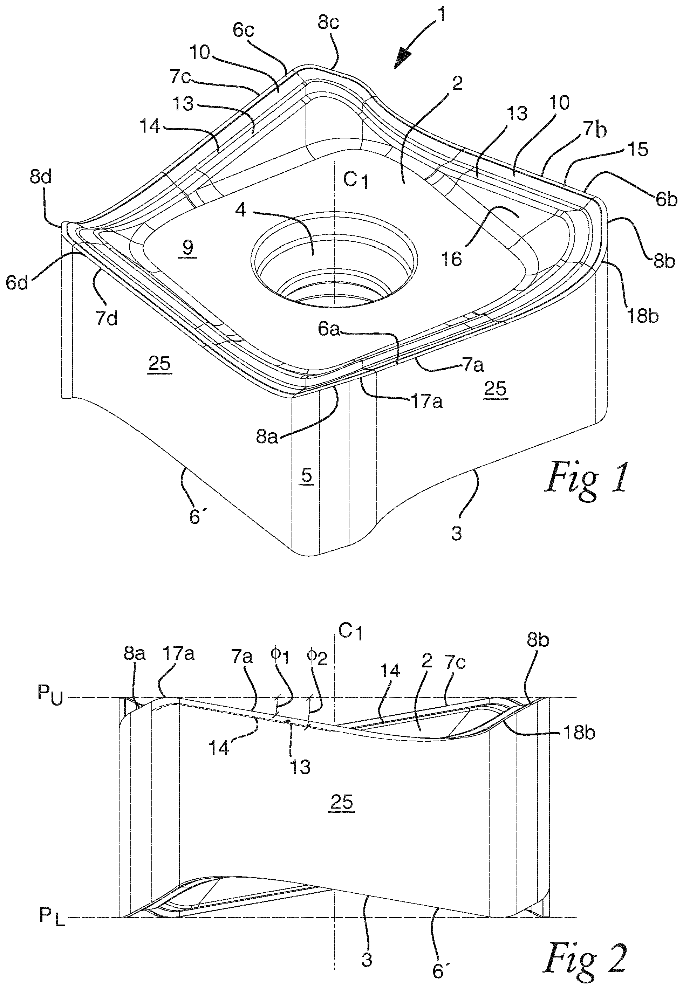

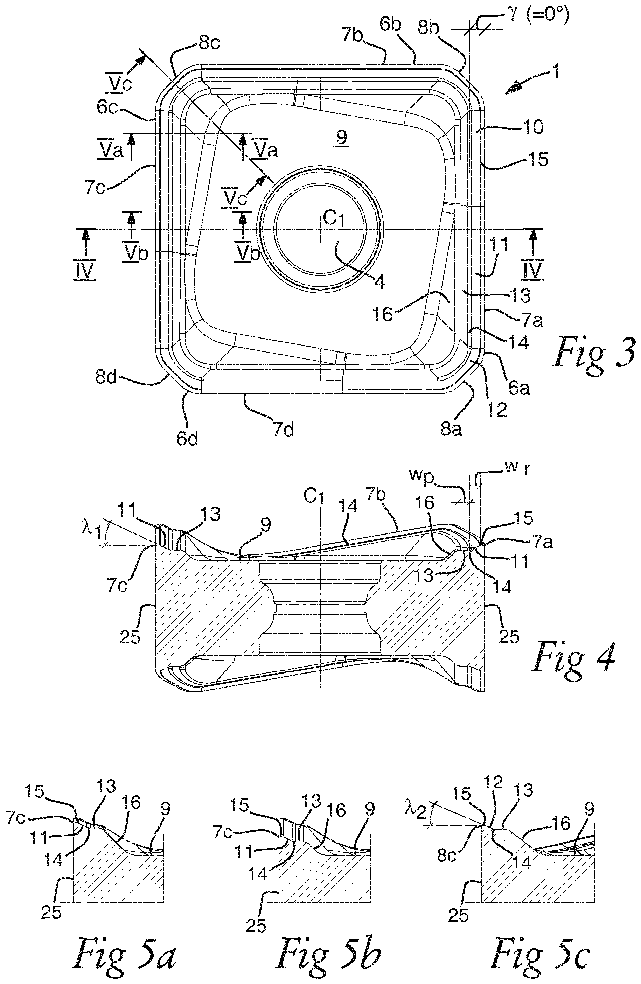

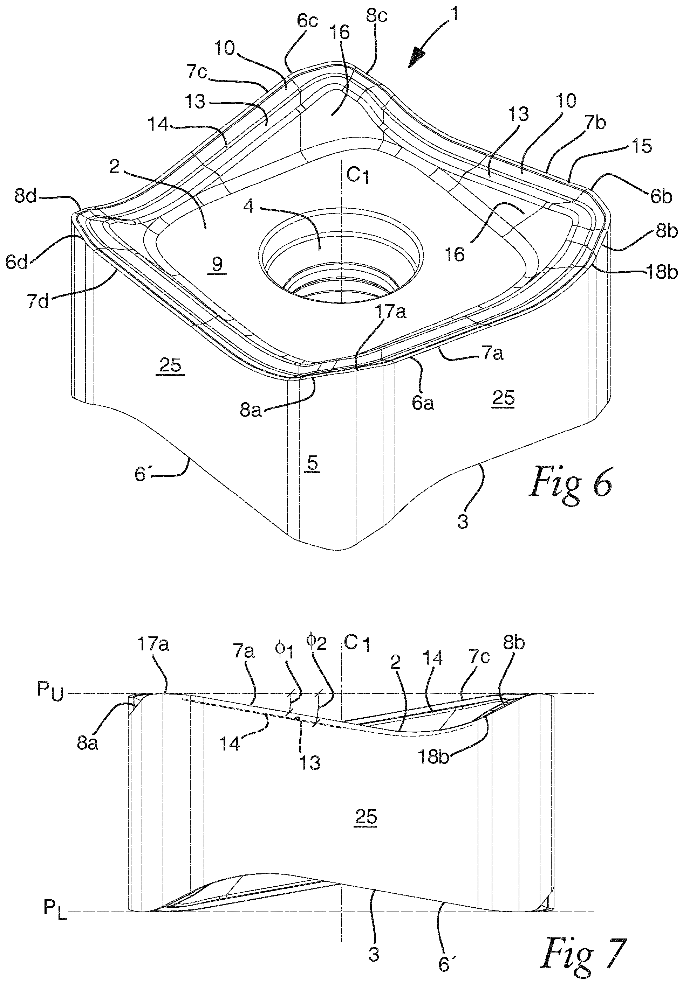

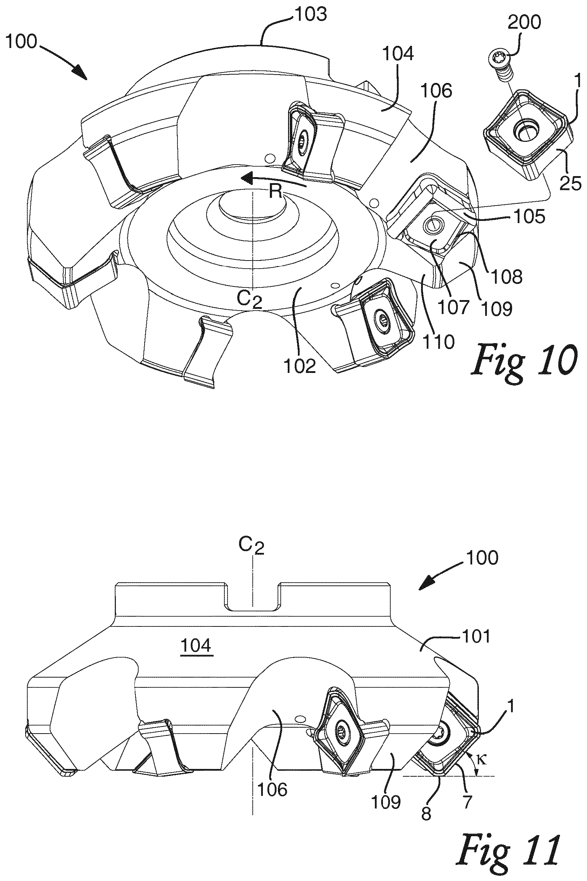

A cutting insert 1 according to a first embodiment of the invention is shown in figs. 1-5c and a cutting insert according to a second embodiment is shown in figs. 6-9. The cutting insert 1 according to the first embodiment is intended for use in face milling operations at an entering angle κ of 45° as shown in fig. 11, wherein the cutting insert 1 according to the first embodiment is mounted in a tool body 101 of a milling tool 100. The cutting insert 1 according to the second embodiment is instead configured for use in a face milling tool 100 at an entering angle κ of 68°. The cutting insert 1 has in both embodiments a square basic shape and is double-sided with an identical upper side 2 and lower side 3, defining an upper extension plane P_{U} and a lower extension plane P_{L}, respectively. A centre axis C₁ extends perpendicularly through the upper and lower extension planes P_{U}, P_{L}, and a central through hole 4 for screw mounting the cutting insert 1 to a milling tool extends around the centre axis C₁. A peripheral side surface 5, parallel with the centre axis C₁, extends between the upper side 2 and the lower side 3. The peripheral side surface 5 constitutes a clearance surface when the cutting insert 1 is used in a milling operation.

Four identical cutting edges 6a, 6b, 6c, 6d are formed in a transition between the upper side 2 and the peripheral side surface 5, and four identical cutting edges 6' are formed in a transition between the lower side 3 and the peripheral side surface 5, so that the cutting insert 1 is indexable with a total of eight index positions. Since the upper side 2 and the lower side 3 are identical, only the upper side 2 and the cutting edges 6a, 6b, 6c, 6d extending around the upper side 2 will be described in detail.

Each cutting edge 6a, 6b, 6c, 6d comprises a chip-removing main cutting edge 7a, 7b, 7c, 7d and a surface-wiping secondary cutting edge 8a, 8b, 8c, 8d. The main cutting edges 7a, 7b, 7c, 7d are formed in a transition between the upper side 2 and main parts 25 of the side surface. At its first end, the main cutting edge 7a of a first one 6a of the cutting edges is connected to the surface-wiping secondary cutting edge 8a belonging to the same first cutting edge 6a, via an active corner cutting edge 17a. At its second end, opposite to the first end, the same main cutting edge 7a is connected to the surface-wiping secondary cutting edge 8b belonging to the second cutting edge 6b, via an inactive corner cutting edge 18b. Since the cutting edges 6a, 6b, 6c, 6d are identical, the remaining cutting edges 6b, 6c, 6d are correspondingly connected. Therefore, reference will in the following mainly be made to the first cutting edge 6a.

In the first embodiment shown in figs. 1-5c, the surface-wiping secondary cutting edge 8a is formed at an angle of 45° with respect to the main cutting edge 7a as seen in a top view. In the second embodiment shown in figs. 6-9, the surface-wiping secondary cutting edge 8a is formed at an angle of 68° with respect to the main cutting edge 7a as seen in a top view.

The main cutting edge 7a is in both embodiments positively inclined with an angle ϕ₁ of 10° with respect to the upper extension plane P_{U} as seen in a side view, and thus slopes downward in a direction from the surface-wiping secondary cutting edge 8. The highest point of the cutting edge 6a is located on the active corner cutting edge 17a. In the shown embodiments, the entire main cutting edge 7a projects above a central surface 9 of the upper side 2, extending around the central through hole 4. The central surface 9 extends in parallel with, and is recessed with respect to, the upper extension plane P_{U}.

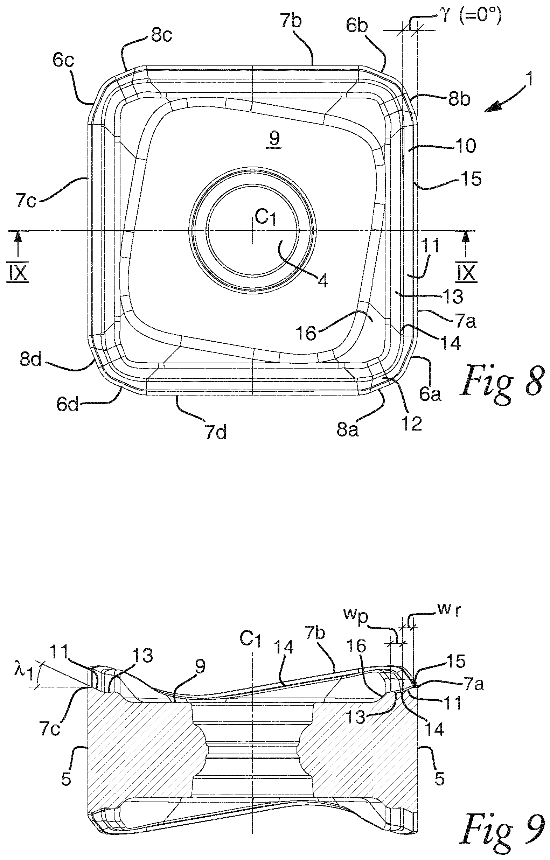

The upper side 2 comprises a rake surface 10 extending inside of and along the cutting edges 6a, 6b, 6c, 6d. The rake surface 10 slopes downward toward the central surface 9, i.e. it has a positive inclination with respect to the upper extension plane P_{U}. In both embodiments, a main rake surface portion 11 of the rake surface 10, extending along the main cutting edge 7a, is inclined with an angle of inclination λ₁ of 25° with respect to the upper extension plane P_{U}, as shown in figs. 4 and 9, respectively. A secondary rake surface portion 12, extending inside the surface-wiping secondary cutting edge 8c, extends at a slightly smaller angle of inclination λ₂. In the first embodiment, as shown in fig. 5c, the angle of inclination λ₂ is 23°, while in the second embodiment, the angle of inclination λ₂ (not shown for this embodiment) is 21°.

The upper side 2 further comprises a plateau 13 extending inside of the rake surface 10 and along the cutting edges 6a, 6b, 6c, 6d. The plateau 13 is elevated with respect to the central surface 9. As seen in a top view, and also in a sectional side view such as shown in fig. 4 and 9, respectively, a transition 14 between the rake surface 10 and the plateau 13 extends at an angle γ=0° with respect to the cutting edge, i.e. in parallel with the cutting edge. The transition 14 between the rake surface 10 and the plateau 13 is herein a radial transition with a relatively small radius of curvature, so that the plateau 13 and the rake surface 10 form separate planar surfaces. Thus, along the main cutting edge 7a, the plateau 13 and the transition 14 extend in parallel with the main cutting edge 7a. As seen in a side view, as shown in figs. 2 and 7, the plateau 13 and the transition 14 extend at an angle of inclination ϕ₂ with respect to the upper extension plane P_{U} corresponding to the angle of inclination ϕ₁ of the main cutting edge 7a. The hidden transition 14 and the hidden plateau 13, inside the main cutting edge 7a, are in the side views marked with dashed lines. As seen in vertical sections taken perpendicularly to the cutting edge 6c, the plateau 13 is essentially parallel with the upper extension plane P_{U} along the main cutting edge 7c and the surface-wiping secondary cutting edge 8c. This can be seen in the sectional views in figs. 4, 5a, 5b and 5c for the cutting insert 1 according to the first embodiment, and in fig. 9 for the cutting insert 1 according to the second embodiment.

Between the rake surface 10 and the cutting edges 6a, 6b, 6c, 6d, a primary land 15 is provided. In the first embodiment, the primary land 15 extends in parallel with the upper extension plane P_{U}, i.e. at a neutral angle of inclination, along the main cutting edge 7a, 7c and the secondary surface-wiping cutting edge 8a, 8c as shown in the sectional views in figs. 4-5c. In the second embodiment, the angle of inclination of the primary land 15 is neutral inside the main cutting edge 7a, but is negative with an angle of -5° inside the secondary surface-wiping cutting edge 8a.

A width wₚ of the plateau 13 is in the shown embodiments the same or essentially the same along the entire plateau 13. It is approximately equal to a width wᵣ of the rake surface 10, wherein the widths are measured as projected onto the upper extension plane P_{U}, i.e. in a top view of the cutting insert 1. A width of the primary land 15 in the shown embodiments is significantly smaller than the widths of the rake surface 10 and the plateau 13.

A shortest distance between the plateau 13 and the cutting edge 6a is in the shown embodiments approximately the same along the entire plateau 13, and it is identical along the positively inclined part of the main cutting edge 7a. The main cutting edge 7a has a negatively inclined part which extends from the lowest point of the main cutting edge, when seen in figs. 2 and 7, toward the inactive corner cutting edge 18b. By the lowest point of the main cutting edge, the point which is closest to the lower extension plane P_{L} is intended.

In the shown embodiments, the plateau 13 extends along the entire cutting edges 6a, 6b, 6c, 6d. However, this is not necessary. Instead the plateau may be formed such that it extends merely inside of the main cutting edge, or inside a projecting part of the main cutting edge.

The upper side 2 further comprises a transition surface 16 connecting the plateau 13 and the central surface 9. The transition surface 16 is positively inclined as seen in a vertical section taken perpendicularly to the main cutting edge 7a.

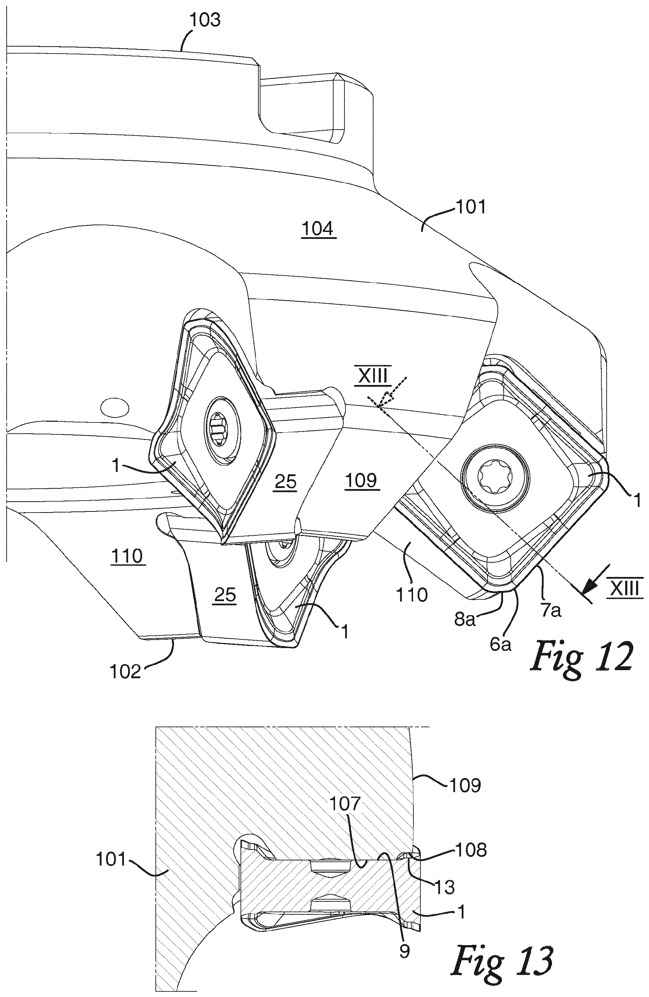

A milling tool 100 configured for face milling is shown in figs. 10-13. The milling tool 100 comprises a tool body 101 having a central rotation axis C₂ around which the tool body is rotatable in a direction of rotation R. The tool body 101 has a front end 102 and a rear end 103 between which an envelope surface 104 extends. The rear end is configured for mounting the tool body 101 to e.g. a rotating spindle of a machine via e.g. a tool holder (not shown). Six insert seats 105, in which cutting inserts 1 according to the first embodiment described above are mounted by means of screws 200, are formed in a transition between the front end 102 and the envelope surface 104. A chip pocket 106 is provided in front of each insert seat in the direction of rotation R. Each insert seat 105 comprises a bottom contact surface 107 configured to support the central surface 9 of the lower side 3 of the double-sided cutting insert 1. The insert seat 105 further comprises a recess 108 extending between the bottom contact surface 107 and the envelope surface 104. The recess 108 is configured to accommodate the plateau 13 of the lower side 3 of the double-sided cutting insert 1. In the shown embodiment, with square cutting inserts 1, the tool body 101 has a first and a second peripheral surface 109, 110, formed at approximately right angles with respect to one another and at about 45° with respect to the centre axis C₂, extending behind the cutting insert 1 in the direction of rotation R and forming a continuation of the main part 25 of the peripheral side surface 5 of the cutting insert 1. The recess 108 is in this embodiment formed on one hand between the bottom contact surface 107 and the first peripheral surface 109, and on the other hand between the bottom contact surface 107 and the second peripheral surface 110.

During machining of a workpiece, the active cutting edge 6a of the cutting insert 1, and in particular the main cutting edge 7a, removes material from the workpiece such that a chip is formed. The chip travels over the rake surface 10 and is deflected by the plateau 13. Since the plateau 13 extends in parallel with the cutting edge 6a, the conditions for chip forming are similar along the main cutting edge 7a, i.e. for varying cutting depths.

The invention is of course not limited to the embodiments disclosed, but may be varied and modified within the scope of the following claims. For example, the shape of the cutting inserts may be varied as well as the number of cutting inserts used in the milling tool. For example, the cutting inserts may be circular, octagonal, hexagonal, triangular, trigonal, heptagonal, square, etc. Instead of screws, other fastening members can be used for mounting the cutting inserts in the tool body, such as e.g. clamping members.

## Claims

1. A cutting insert (1) for a milling tool (100), comprising:
- an upper side (2) defining an upper extension plane (P_{U}) and comprising a central surface (9),
- a lower side (3) opposite to the upper side (2) defining a lower extension plane (P_{L}), wherein a centre axis (C₁) extends perpendicularly through the upper and lower extension planes (P_{U}, P_{L}),
- a peripheral side surface (5) extending between the upper side (2) and the lower side (3),
- at least one cutting edge (6a, 6b, 6c, 6d) formed in a transition between the upper side (2) and the peripheral side surface (5), wherein the at least one cutting edge (6a, 6b, 6c, 6d) comprises a main cutting edge (7a, 7b, 7c, 7d) formed in a transition between the upper side (2) and a main part (25) of the peripheral side surface (5), wherein at least a projecting major portion of the main cutting edge (7a, 7b, 7c, 7d) projects above the central surface (9), wherein the projecting major portion of the main cutting edge (7a, 7b, 7c, 7d) is at least in part positively inclined with respect to the upper extension plane (P_{U}) and creates an angle ϕ₁ with the upper extension plane (P_{U}) as seen in a direction orthogonal to the main part (25) of the peripheral side surface (5),
wherein the upper side (2) comprises at least one rake surface (10) extending inside of and along the at least one cutting edge (6a, 6b, 6c, 6d), wherein the rake surface (10) slopes downward toward the central surface (9), wherein
a plateau (13) extending at least along the projecting major portion of the main cutting edge (7a, 7b, 7c, 7d) is formed inside of the at least one rake surface (10), wherein the plateau (13) is elevated with respect to the central surface (9), and wherein, as seen in the direction orthogonal to the main part (25) of the peripheral side surface (5), a transition (14) between the rake surface (10) and the plateau (13) extends at an angle ϕ₂ with respect to the upper extension plane (P_{U}), wherein ϕ₂>0°, wherein as seen in a top view, the transition (14) between the rake surface (10) and the plateau (13) extends at an angle γ with respect to the main cutting edge (7a, 7b, 7c, 7d), wherein -5° ≤ γ ≤ 5°,
***characterised in***
**that** a width wₚ of the plateau (13) is related to a width wᵣ of the rake surface (10) as 0.5 wᵣ ≤ wₚ ≤ 2 wᵣ , wherein the width wₚ of the plateau (13) is the same along at least the projecting major portion of the main cutting edge (7a, 7b, 7c, 7d), wherein the widths are measured in a direction perpendicular to the main cutting edge inside of which the plateau and the rake surface extend, and wherein the plateau (13) forms a plane that extends in parallel with the main cutting edge (7a, 7b, 7c, 7d), or at an angle of no more than ±5° with respect to the main cutting edge (7a, 7b, 7c, 7d).

2. The cutting insert according to claim 1, wherein the rake surface (10) and/or the plateau (13) are planar surfaces at least along the projecting major portion of the main cutting edge (7a, 7b, 7c, 7d) or at least along a part of the projecting major portion of the main cutting edge (7a, 7b, 7c, 7d).

3. The cutting insert according to claim 1 or 2, wherein the transition between the rake surface (10) and the plateau (13) extends in parallel with at least the projecting major portion of the main cutting edge (7a, 7b, 7c, 7d) or at least with a part of the projecting major portion of the main cutting edge (7a, 7b, 7c, 7d)..

4. The cutting insert according to any one of the preceding claims, wherein, as seen in a vertical section taken perpendicularly to the main cutting edge (7a, 7b, 7c, 7d), the plateau (13) is parallel to the upper extension plane P_{U} or has an angle of inclination of no more than ±5° with respect to the upper extension plane P_{U}.

5. The cutting insert according to any one of the preceding claims, wherein a shortest distance between the main cutting edge (7a, 7b, 7c, 7d) and the plateau (13) is the same along at least the projecting major portion of the main cutting edge (7a, 7b, 7c, 7d) or at least along a part of the projecting major portion of the main cutting edge (7a, 7b, 7c, 7d).

6. The cutting insert according to any one of the preceding claims, wherein a primary land (15) is provided between at least a part of the at least one cutting edge (6a, 6b, 6c, 6d) and the rake surface (10).

7. The cutting insert according to any one of the preceding claims, wherein the plateau (13) extends all the way along the at least one cutting edge (6).

8. The cutting insert according to any one of the preceding claims, wherein the upper side (2) further comprises a transition surface (16) connecting the plateau (13) and the central surface (9), wherein the transition surface (16) is positively inclined as seen in a vertical section taken perpendicularly to the main cutting edge (7a, 7b, 7c, 7d).

9. The cutting insert according to any one of the preceding claims, wherein the cutting insert (1) is indexable with at least two or three or four or five or six or seven or eight identical and alternately usable main cutting edges (7a, 7b, 7c, 7d) formed in the transition between the upper side (2) and the peripheral side surface (5).

10. The cutting insert according to any one of the preceding claims, wherein the cutting insert (1) is double-sided with the lower side (3) being identical to the upper side (2), at least one cutting edge (6') being formed in a transition between the lower side (3) and the peripheral side surface (5).

11. A milling tool (100) comprising a tool body (101) provided with an insert seat (105) for receiving a cutting insert (1), wherein the milling tool (100) comprises a cutting insert (1) according to any one of the preceding claims arranged in the insert seat (105).

## Patentansprüche

1. Schneideinsatz (1) für ein Fräswerkzeug (100), umfassend:
- eine Oberseite (2), die eine obere Erstreckungsebene (P_{U}) definiert und eine zentrale Fläche (9) umfasst,
- eine der Oberseite (2) gegenüberliegende Unterseite (3), die eine untere Erstreckungsebene (P_{U}) definiert, wobei sich eine Mittelachse (C₁) senkrecht durch die obere und die untere Erstreckungsebene (P_{U}, P_{L}) erstreckt,
- eine Umfangsseitenfläche (5), die sich zwischen der Oberseite (2) und der Unterseite (3) erstreckt,
- mindestens eine Schneidkante (6a, 6b, 6c, 6d), die in einem Übergang zwischen der Oberseite (2) und der Umfangsseitenfläche (5) gebildet ist, wobei die mindestens eine Schneidkante (6a, 6b, 6c, 6d) eine Hauptschneidkante (7a, 7b, 7c, 7d) umfasst, die in einem Übergang zwischen der Oberseite (2) und einem Hauptteil (25) der Umfangsseitenfläche (5) gebildet ist, wobei mindestens ein vorspringender Hauptabschnitt der Hauptschneidkante (7a, 7b, 7c, 7d) über die zentrale Fläche (9) hinausragt, wobei der vorspringende Hauptabschnitt der Hauptschneidkante (7a, 7b, 7c, 7d) mindestens teilweise in Bezug auf die obere Erstreckungsebene (P_{U}) positiv geneigt ist und, gesehen in einer Richtung orthogonal zu dem Hauptteil (25) der Umfangsseitenfläche (5), einen Winkel θ1 mit der oberen Erstreckungsebene (P_{U}) bildet,
wobei die Oberseite (2) mindestens eine Spanfläche (10) umfasst, die sich innerhalb und entlang der mindestens einen Schneidkante (6a, 6b, 6c, 6d) erstreckt, wobei die Spanfläche (10) zur zentralen Fläche (9) hin nach unten abfällt, wobei
ein Plateau (13), das sich mindestens entlang des vorspringenden Hauptabschnitts der Hauptschneidkante (7a, 7b, 7c, 7d) erstreckt, innerhalb der mindestens einen Spanfläche (10) gebildet ist, wobei das Plateau (13) in Bezug auf die zentrale Fläche (9) erhöht ist, und wobei, gesehen in der Richtung orthogonal zu dem Hauptteil (25) der Umfangsseitenfläche (5), sich ein Übergang (14) zwischen der Spanfläche (10) und dem Plateau (13) unter einem Winkel θ2 in Bezug auf die obere Erstreckungsebene (P_{U}) erstreckt, wobei θ2>0°, wobei, in einer Draufsicht gesehen, sich der Übergang (14) zwischen der Spanfläche (10) und dem Plateau (13) unter einem Winkel γ in Bezug auf die Hauptschneidkante (7a, 7b, 7c, 7d) erstreckt, wobei -5° < γ < 5°,
**dadurch gekennzeichnet,**
**dass** eine Breite wₚ des Plateaus (13) zu einer Breite wᵣ der Spanfläche (10) in der Beziehung 0.5 wᵣ ≤ wₚ ≤ 2 wᵣ steht, wobei die Breite wₚ des Plateaus (13) mindestens entlang des vorspringenden Hauptabschnitts der Hauptschneidkante (7a, 7b, 7c, 7d) gleich ist, wobei die Breiten in einer Richtung senkrecht zu der Hauptschneidkante gemessen werden, innerhalb welcher sich das Plateau und die Spanfläche erstrecken, und wobei das Plateau (13) eine Ebene bildet, die sich parallel zu der Hauptschneidkante (7a, 7b, 7c, 7d) oder unter einem Winkel von nicht mehr als ±5° in Bezug auf die Hauptschneidkante (7a, 7b, 7c, 7d) erstreckt.

2. Schneideinsatz nach Anspruch 1, wobei die Spanfläche (10) und/oder das Plateau (13) mindestens entlang des vorspringenden Hauptabschnitts der Hauptschneidkante (7a, 7b, 7c, 7d) oder mindestens entlang eines Teils des vorspringenden Hauptabschnitts der Hauptschneidkante (7a, 7b, 7c, 7d) ebene Flächen sind.

3. Schneideinsatz nach Anspruch 1 oder 2, wobei sich der Übergang zwischen der Spanfläche (10) und dem Plateau (13) parallel zu mindestens dem vorspringenden Hauptabschnitt der Hauptschneidkante (7a, 7b, 7c, 7d) oder mindestens zu einem Teil des vorspringenden Hauptabschnitts der Hauptschneidkante (7a, 7b, 7c, 7d) erstreckt.

4. Schneideinsatz nach einem der vorhergehenden Ansprüche, wobei, gesehen in einem vertikalen Schnitt, der senkrecht zu der Hauptschneidkante (7a, 7b, 7c, 7d) genommen ist, das Plateau (13) parallel zu der oberen Erstreckungsebene P_{U} ist oder einen Neigungswinkel von nicht mehr als ±5° in Bezug auf die obere Erstreckungsebene P_{U} aufweist.

5. Schneideinsatz nach einem der vorhergehenden Ansprüche, wobei ein kürzester Abstand zwischen der Hauptschneidkante (7a, 7b, 7c, 7d) und dem Plateau (13) mindestens entlang des vorspringenden Hauptabschnitts der Hauptschneidkante (7a, 7b, 7c, 7d) oder mindestens entlang eines Teils des vorspringenden Hauptabschnitts der Hauptschneidkante (7a, 7b, 7c, 7d) gleich ist.

6. Schneideinsatz nach einem der vorhergehenden Ansprüche, wobei eine Primärfase (15) zwischen mindestens einem Teil der mindestens einen Schneidkante (6a, 6b, 6c, 6d) und der Spanfläche (10) vorgesehen ist.

7. Schneideinsatz nach einem der vorhergehenden Ansprüche, wobei sich das Plateau (13) vollständig entlang der mindestens einen Schneidkante (6) erstreckt.

8. Schneideinsatz nach einem der vorhergehenden Ansprüche, wobei die Oberseite (2) ferner eine Übergangsfläche (16) umfasst, die das Plateau (13) und die zentrale Fläche (9) verbindet, wobei die Übergangsfläche (16), gesehen in einem vertikalen Schnitt, der senkrecht zu der Hauptschneidkante (7a, 7b, 7c, 7d) genommen ist, positiv geneigt ist.

9. Schneideinsatz nach einem der vorhergehenden Ansprüche, wobei der Schneideinsatz (1) mit mindestens zwei oder drei oder vier oder fünf oder sechs oder sieben oder acht identischen und abwechselnd verwendbaren Hauptschneidkanten (7a, 7b, 7c, 7d), die in dem Übergang zwischen der Oberseite (2) und der Umfangsseitenfläche (5) gebildet sind, indexierbar ist.

10. Schneideinsatz nach einem der vorhergehenden Ansprüche, wobei der Schneideinsatz (1) doppelseitig ist, wobei die Unterseite (3) mit der Oberseite (2) identisch ist, wobei mindestens eine Schneidkante (6') in einem Übergang zwischen der Unterseite (3) und der Umfangsseitenfläche (5) gebildet ist.

11. Fräswerkzeug (100), umfassend einen Werkzeugkörper (101), der mit einem Plattensitz (105) zum Aufnehmen eines Schneideinsatzes (1) versehen ist, wobei das Fräswerkzeug (100) einen Schneideinsatz (1) nach einem der vorhergehenden Ansprüche umfasst, der in dem Plattensitz (105) angeordnet ist.

## Revendications

1. Plaquette de coupe (1) pour un outil de fraisage (100), comprenant :
- une face supérieure (2) définissant un plan d'extension supérieur (P_{U}) et comprenant une surface centrale (9),
- une face inférieure (3) opposée à la face supérieure (2) définissant un plan d'extension inférieur (P_{L}), dans lequel un axe central (C₁) s'étend perpendiculairement à travers les plans d'extension supérieur et inférieur (P_{U}, P_{L}),
- une surface latérale périphérique (5) s'étendant entre la face supérieure (2) et la face inférieure (3),
- au moins une arête de coupe (6a, 6b, 6c, 6d) formée dans une transition entre la face supérieure (2) et la surface latérale périphérique (5), dans laquelle au moins une arête de coupe (6a, 6b, 6c, 6d) comprend une arête de coupe principale (7a, 7b, 7c, 7d) formée dans une transition entre la face supérieure (2) et une partie principale (25) de la surface latérale périphérique (5), dans laquelle au moins une portion principale saillante de l'arête de coupe principale (7a, 7b, 7c, 7d) fait saillie au-dessus de la surface centrale (9), dans laquelle la portion principale saillante de l'arête de coupe principale (7a, 7b, 7c, 7d) est au moins en partie inclinée positivement par rapport au plan d'extension supérieur (P_{U}) et forme un angle Φ1 avec le plan d'extension supérieur (P_{U}) tel que vu dans une direction orthogonale à la partie principale (25) de la surface latérale périphérique (5),
dans lequel la face supérieure (2) comprend au moins une face de dépouille (10) s'étendant à l'intérieur et le long de ladite au moins une arête de coupe (6a, 6b, 6c, 6d), dans laquelle la face de dépouille (10) est inclinée vers le bas en direction de la surface centrale (9), dans lequel
un plateau (13) s'étendant au moins le long de la portion principale saillante de l'arête de coupe principale (7a, 7b, 7c, 7d) est formé à l'intérieur de ladite au moins une face de dépouille (10),dans lequel le plateau (13) est surélevé par rapport à la surface centrale (9), et dans lequel, tel que vu dans la direction orthogonale à la partie principale (25) de la surface latérale périphérique (5), une transition (14) entre la face de dépouille (10) et le plateau (13) s'étend selon un angle Φ2 par rapport au plan d'extension supérieur (P_{U}), dans lequel Φ2>0°, dans lequel tel que vu en vue de dessus, la transition (14) entre la face de dépouille (10) et le plateau (13) s'étend selon un angle γ par rapport à l'arête de coupe principale (7a, 7b, 7c, 7d), dans lequel -5° ≤ γ≤ 5°,
**caractérisé en**
**ce qu'**une largeur wₚ du plateau (13) est reliée à une largeur wᵣ de la face de dépouille (10) comme 0,5 wᵣ ≤ wₚ ≤ 2 wᵣ, dans laquelle la largeur wₚ du plateau (13) est identique le long d'au moins la portion principale saillante de l'arête de coupe principale (7a, 7b, 7c, 7d), dans lequel les largeurs sont mesurées dans une direction perpendiculaire à l'arête de coupe principale à l'intérieur de laquelle le plateau et la face de dépouille s'étendent, et dans lequel le plateau (13) forme un plan qui s'étend parallèlement à l'arête de coupe principale (7a, 7b, 7c, 7d), ou selon un angle d'au plus ±5° par rapport à l'arête de coupe principale (7a, 7b, 7c, 7d).

2. Plaquette de coupe selon la revendication 1, dans laquelle la face de dépouille (10) et/ou le plateau (13) sont des surfaces planes au moins le long de la portion principale saillante de l'arête de coupe principale (7a, 7b, 7c, 7d) ou au moins le long d'une partie de la portion principale saillante de l'arête de coupe principale (7a, 7b, 7c, 7d).

3. Plaquette de coupe selon la revendication 1 ou 2,dans laquelle la transition entre la face de dépouille (10) et le plateau (13) s'étend parallèlement à au moins la portion principale saillante de l'arête de coupe principale (7a, 7b, 7c, 7d) ou au moins à une partie de la portion principale saillante de l'arête de coupe principale (7a, 7b, 7c, 7d).

4. Plaquette de coupe selon l'une quelconque des revendications précédentes, dans laquelle, telle que vue en section verticale prise perpendiculairement à l'arête de coupe principale (7a, 7b, 7c, 7d), le plateau (13) est parallèle au plan d'extension supérieur P_{U} ou présente un angle d'inclinaison d'au plus ±5° par rapport au plan d'extension supérieur P_{U}.

5. Plaquette de coupe selon l'une quelconque des revendications précédentes, dans laquelle une distance la plus courte entre l'arête de coupe principale (7a, 7b, 7c, 7d) et le plateau (13) est identique le long d'au moins la portion principale saillante de l'arête de coupe principale (7a, 7b, 7c, 7d) ou au moins le long d'une partie de la portion principale saillante de l'arête de coupe principale (7a, 7b, 7c, 7d).

6. Plaquette de coupe selon l'une quelconque des revendications précédentes, dans laquelle une plate-bande principale (15) est prévue entre au moins une partie de ladite au moins une arête de coupe (6a, 6b, 6c, 6d) et la face de dépouille (10).

7. Plaquette de coupe selon l'une quelconque des revendications précédentes, dans laquelle le plateau (13) s'étend sur toute la longueur de ladite au moins une arête de coupe (6).

8. Plaquette de coupe selon l'une quelconque des revendications précédentes, dans laquelle la face supérieure (2) comprend en outre une surface de transition (16) reliant le plateau (13) et la surface centrale (9), dans laquelle la surface de transition (16) est inclinée positivement telle que vue en section verticale prise perpendiculairement à l'arête de coupe principale (7a, 7b, 7c, 7d).

9. Plaquette de coupe selon l'une quelconque des revendications précédentes, dans laquelle la plaquette de coupe (1) est indexable avec au moins deux ou trois ou quatre ou cinq ou six ou sept ou huit arêtes de coupe principales (7a, 7b, 7c, 7d) identiques et utilisables alternativement formées dans la transition entre la face supérieure (2) et la surface latérale périphérique (5).

10. Plaquette de coupe selon l'une quelconque des revendications précédentes, dans laquelle la plaquette de coupe (1) est double face avec la face inférieure (3) étant identique à la face supérieure (2), au moins une arête de coupe (6') étant formée dans une transition entre la face inférieure (3) et la surface latérale périphérique (5).

11. Outil de fraisage (100) comprenant un corps d'outil (101) pourvu d'un logement de plaquette (105) destiné à recevoir une plaquette de coupe (1),dans lequel l'outil de fraisage (100) comprend une plaquette de coupe (1) selon l'une quelconque des revendications précédentes disposée dans le logement de plaquette (105).
